# EUROPÄISCHE PATENTSCHRIFT

(11) **EP 1 979 796 B1**
(45) Veröffentlichungstag und Bekanntmachung des Hinweises auf die Patenterteilung: **29.06.2011**
(21) Anmeldenummer: 07702455.2
(22) Anmeldetag: 25.01.2007
(51) Int. Cl.: G05D 16/06, F24D 10/00, F16K 7/12

(54) **VENTILANORDNUNG ZUM ANSCHLIESSEN EINES WÄRMETAUSCHERS EINER WARMWASSERENTNAHMEVORRICHTUNG AN EIN FERNWÄRMENETZ**
VALVE ARRANGEMENT FOR CONNECTING A HEAT EXCHANGER OF A HOT WATER EXTRACTION DEVICE TO A DISTRICT HEATING NETWORK
SYSTÈME DE SOUPAPES POUR RACCORDER UN ÉCHANGEUR DE CHALEUR D'UN DISPOSITIF DE PRÉLÈVEMENT D'EAU CHAUDE À UN RÉSEAU DE CHAUFFAGE URBAIN

(30) Priorität: 27.01.2006 DE 102006004183
(43) Veröffentlichungstag der Anmeldung: 15.10.2008
(73) Patentinhaber: Danfoss A/S, DK-6430 Nordborg (DK)
(72) Erfinder: MØLBÆK, Jens Jørgen, DK-6430, Nordborg (DK); HUDOKLIN, Urh, SI-8210 Trebnje (SI); VIDIC, Tomaz, SI-1251 Moravce (SI)
(86) Internationale Anmeldenummer: PCT/DK2007/000031
(87) Internationale Veröffentlichungsnummer: WO 2007/085255

(56) Entgegenhaltungen:
- EP-A1- 0 466 010
- DE-A1- 10 254 239
- DE-C2- 19 618 093
- GB-A- 802 217

## Beschreibung

Die Erfindung betrifft eine Ventilanordnung zum Anschließen eines Wärmetauschers einer Warmwasserentnahmevorrichtung an ein Fernwärmenetz mit einem primärseitigen Ventil, das einen Durchfluß von Wärmeträgerfluid durch eine Primärseite des Wärmetauschers steuert, und einem druckgesteuerten sekundärseitigen Ventil, das auf einen Durchfluß von Brauchwasser durch eine Sekundärseite des Wärmetauschers einwirkt, wobei das primärseitige Ventil durch das sekundärseitige Ventil betätigbar ist

Eine derartige Ventilanordnung ist aus DE 196 18 093 C2 bekannt. In dieser Ventilanordnung ist das primärseitige Ventil durch eine Öffnungsfeder in Öffnungsrichtung beaufschlagt. In Schließrichtung ist das primärseitige Ventil durch das sekundärseitige Ventil beaufschlagt. Wenn das sekundärseitige Ventil aufgrund einer Druckdifferenz zwischen seinem Eingang und seinem Ausgang öffnet, dann läßt auch die Schließkraft auf das primärseitige Ventil nach und das primärseitige Ventil öffnet. Umgekehrt ist das sekundärseitige Ventil zusätzlich durch einen temperaturgesteuerten Antrieb beaufschlagt, der auf der dem primärseitigen Ventil abgewandten Seite des sekundärseitigen Ventils angeordnet ist. Auf diese Weise kann man den Zustrom von Wärmeträgerflüssigkeit in die Primärseite des Wärmetauschers sowohl in Abhängigkeit von der Temperatur auf der Sekundärseite als auch in Abhängigkeit von dem Brauchwasserstrom steuern, der von der Sekundärseite entnommen wird.

Allerdings ist die Herstellung einer derartigen Ventil-anordnung relativ kompliziert. Man muß das primärseitige Ventil, das sekundärseitige Ventil und den temperaturgesteuerten Antrieb relativ exakt zueinander ausrichten und positionieren, damit die gewünschten Steuereigenschaften der Ventilanordnung erhalten werden.

Dieses problem wird bei einer Ventilanordnung der eingangs genannten Art dadurch gelöst, daß das primärseitige Ventil in einem ersten Gehäuseteil und das sekundärseitige Ventil in einem zweiten Gehäuseteil angeordnet ist und die beiden Gehäuseteile durch ein drittes Gehäuseteil miteinander verbunden sind, das eine Betätigungseinrichtung aufnimmt, mit der das primärseitige Ventil durch das sekundärseitige Ventil betätigbar ist

Mit einer derartigen Ausgestaltung wird die Herstellung der Ventilanordnung vereinfacht. Die Ventilanordnung besteht im Prinzip aus drei selbständigen Modulen, die jeweils in einem Gehäuseteil untergebracht sind. Jedes Modul kann getrennt von den anderen Modulen, hergestellt und voreingestellt werden. Die Ventilanordnung ergibt sich erst durch das Zusammensetzen der drei Module. Vorteilhafterweise liegen dabei die drei Gehäuseteile in einer Richtung hintereinander. Das Zusammensetzen der drei Gehäuseteile kann in einem relativ späten Stadium der Herstellung erfolgen. Funktional sind dabei das primärseitige Ventil und das sekundär seitige Ventil, die jeweils in einem eigenen Gehäuseteil untergebracht sind, nur über die Betätigungseinrichtung verbunden, die im dritten Gehäuseteil untergebracht ist. Dabei ist es nicht unbedingt erforderlich, daß die drei Funktionsteile, nämlich das primärseitige und das sekundärseitige Ventil sowie die Betätigungseinrichtung, eine gemeinsame Betätigungsachse haben. Die Betätigungsachsen können seitlich durchaus einen kleinen Versatz aufweisen.

Derartige Ventilanordnungen sind aus DE 102 54 239 A1 und aus EPO 466 010 A1 bekannt.

Erfindungsgemäβ ist dem primärseitigen Ventil ein druckgesteuertes Ventil vorgeschaltet, das eine Membrane aufweist, die sich bis in einen Berührungsbereich zwischen dem ersten Gehäuseteil und dem dritten Gehäuseteil erstreckt. Die Membrane wird zum einen verwendet, um das druckgesteuerte Ventil in Abhängigkeit von lokal herrschenden Drücken steuern zu können. Zum anderen wird die Membrane verwendet, um die Verbindung zwischen dem ersten Gehäuseteil und dem dritten Gehäuseteil abzudichten.

Vorzugsweise weist das erste Gehäuseteil einen primärseitigen ersten Anschluß, das zweite Gehäuseteil einen sekundärseitigen zweiten Anschluß und das dritte Gehäuseteil einen primärseitigen zweiten Anschluß und einen sekundärseitigen ersten Anschluß auf. Damit wird die Anbindung des Wärmetauschers an die Ventilanordnung vereinfacht. Die Anbindung erfolgt ausschließlich über das dritte Gehäuseteil. Die beiden anderen Gehäuseteile können zur Anbindung an das Fernwärmenetz, also den Zufluß von Wärmeträgerfluid, bzw. die Brauchwasserentnahme, verwendet werden. Durch diese Entkopplung vereinfacht sich der Aufbau weiter.

Vorzugsweise weist das sekundärseitige Ventil ein an einer Membrane gelagertes bewegliches Ventilelement auf, wobei sich die Membrane bis in einen Berührungsbereich zwischen dem zweiten Gehäuseteil und dem dritten Gehäuseteil erstreckt. Die Membrane des sekundärseitigen Ventils wird hier für zwei Zwecke ausgenutzt. Zum einen trägt sie das bewegliche Ventilelement, so daß das bewegliche Ventilelement bei einer entsprechenden Auslenkung der Membrane, die beispielsweise durch einen Druckunterschied über die Membrane bewirkt werden kann, verlagert wird. Zum anderen wird die Membrane, die in der Regel aus einem elastomeren Material gebildet ist, dazu verwendet, eine Dichtung zwischen dem zweiten und dem dritten Gehäuseteil zu bilden, so daß man ohne Verwendung von zusätzlichen Bauelementen in diesem Bereich eine dichte Verbindung bekommt.

Hierbei ist bevorzugt, daß das bewegliche Element als Ventilsitz ausgebildet ist, wobei die Membran eine mit dem Ventilsitz in Verbindung stehende Öffnung aufweist, durch die Brauchwasser hindurchfließen kann. Man verwendet also die Membrane, genauer gesagt ihre Öffnung, als einen Teil des Strömungswegs für das Brauchwasser. Damit läßt sich die Ventilanordnung relativ kompakt gestalten. Sie benötigt nur einen relativ geringen Bauraum.

Vorzugsweise weist die Betätigungseinrichtung einen Stößel auf, der in einem Mittelabschnitt des dritten Gehäuseteils gelagert ist. Das dritte Gehäuseteil verbindet also nicht nur die beiden Ventile auf der Primärseite und auf der Sekundärseite. Es nimmt auch den Stößel auf, der den wesentlichen Bestandteil der Betätigungseinrichtung bildet, mit der das sekundärseitige Ventil das primärseitige Ventil beaufschlagt.

Vorzugsweise weist das sekundärseitige Ventil eine einstellbare Ruheöffnung auf. Die Ruheöffnung ist die Öffnung zwischen Ventilsitz und Ventilelement, die sich ergibt, wenn die Membran des sekundärseitigen Ventils sich in einer Neutral- oder Ruhestellung befindet, also die auf beiden Seiten der Membrane wirkenden Kräfte im Gleichgewicht sind. In diesem Fall sollte das sekundärseitige Ventil nicht vollständig geschlossen sein, sondern noch einen kleinen Spalt bilden, so daß ein Druckausgleich zwischen beiden Seiten des sekundärseitigen Ventils erfolgen kann. Ein derartiger Spalt hat auch den Vorteil, daß das Risiko geringer wird, daß das Ventil bei geringen Strömungen auf der Sekundärseite verstopft. Wenn man das sekundärseitige Ventil im Hinblick auf die Ruheöffnung einstellbar macht, dann kann man die für das sekundärseitige Ventil benötigten Elemente mit einer geringeren Genauigkeit fertigen. Die Einstellung der Ruheöffnung kann dann nach dem Fertigstellen der Ventilanordnung in einem Teststand erfolgen, so daß man bei verringerten Herstellungskosten eine erhöhte Genauigkeit der Steuerung bekommt.

Vorzugsweise ist das sekundärseitige Ventil an einem Ende des zweiten Gehäuseteils angeordnet. Wenn das sekundärseitige Ventil an einem Ende des Gehäuses angeordnet ist, dann ist es von außen leichter zugänglich, so daß die Einstellbarkeit erleichtert wird.

Vorzugsweise weist das sekundärseitige Ventil ein stationäres Ventilelement auf, dessen Position relativ zu einer Ruhestellung der Membran einstellbar ist. Durch Verlagerung des Ventilelements läßt sich also die Ruheöffnung des sekundärseitigen Ventils einstellen. Dies ist eine relativ einfache Ausgestaltung.

Vorzugsweise ist das Ventilelement als Konus ausgebildet. Bei einem Konus vergrößert sich der für die Strömung zur Verfügung stehende Querschnitt überproportional mit der Hubhöhe des Ventilsitzes, der an der Membran des sekundärseitigen Ventils befestigt ist. Damit wird die Schwingungsneigung des sekundärseitigen Ventils klein gehalten.

Vorzugsweise ist das Ventilelement in das zweite Gehäuseteil eingeschraubt. Mit dem Einschrauben läßt sich zum einen eine zuverlässige Befestigung des Ventilelements erreichen. Zum anderen läßt sich durch eine Schraubverbindung auf einfache Weise eine axiale Verlagerung des Ventilelements erreichen.

Vorzugsweise ist der Stößel durch das bewegliche Element des sekundärseitigen Ventils angetrieben und wirkt auf ein Ventilelement des primärseitigen Ventils, wobei der Stößel so kurz ist, daß er im Ruhezustand des beweglichen Elements des sekundärseitigen Ventils einen Abstand zum Ventilelement im geöffneten Zustand des primärseitigen Ventils aufweist. Diese Ausgestaltung hat den Vorteil, daß das primärseitige Ventil bei einem im Ruhezustand befindlichen sekundärseitigen Ventil ohne Beeinflussung durch das sekundärseitige Ventil arbeiten kann. Der Stößel und das primärseitige Ventil sind nicht miteinander verbunden und liegen auch in diesem Zustand nicht aneinander an. Erst dann, wenn das sekundärseitige Ventil eine bestimmte Öffnungsweite überschreitet und den Stößel um eine entsprechend große Länge bewegt, kommt der Stößel in Kontakt mit dem Ventilelement des primärseitigen Ventils und beaufschlagt dieses Ventilelement in Öffnungsrichtung.

Hierbei ist bevorzugt, daß das Ventilelement des primärseitigen Ventils einen temperaturgesteuerten Antrieb aufweist. Das primärseitige Ventil wird also in dem Ruhezustand des sekundärseitigen Ventils, wenn also kein Brauchwasser auf der Sekundärseite gezapft wird, ausschließlich als temperaturgesteuertes Ventil betrieben. Die Temperatursteuerung verwendet dabei in der Regel die Temperatur auf der Sekundärseite des Wärmetauschers, genauer gesagt am Ausgang der Sekundärseite des Wärmetauschers, als Regelgröße. Man kann also diese Temperatur durch einen entsprechenden Zufluß von Wärmeträgerfluid auf der Primärseite immer auf einem vorgegebenen Wert konstant halten. Der Benutzer, der warmes Brauchwasser zapft, muß also nicht warten, bis sich der Wärmetauscher erwärmt. Der Regelkreis für das primärseitige Ventil kann also außerordentlich einfach gehalten werden. Es gibt praktisch keine Störgrößen, also andere von außen wirkende Kräfte, die das Regelverhalten dieses temperaturgesteuerten Ventils negativ beeinflussen könnten. Erst dann, wenn auf der Sekundärseite Brauchwasser entnommen wird und das sekundärseitige Ventil weit genug öffnet, wird auch das primärseitige Ventil in Abhängigkeit von dem Flüssigkeitsbedarf auf der Sekundärseite mit beeinflußt, so daß bei einer größeren Menge von entnommenem Brauchwasser auch eine größere Menge von Wärmeträgerfluid auf der Primärseite zugeführt wird.

Vorzugsweise kommen der Stößel und das Ventilelement des primärseitigen Ventils über eine Berührungsfläche in Kontakt, die senkrecht zur Bewegungsrichtung des Stößels angeordnet ist. Diese Berührungsfläche läßt also kleine Versatzbewegungen zwischen dem Stößel und dem Ventilelement des primärseitigen Ventils senkrecht zu ihrer Bewegungsrichtung zu. Die Achsen des Stößels und des primärseitigen Ventilelements müssen also nicht übereinstimmen. Dies vereinfacht die Fertigung weiter.

Hierbei ist bevorzugt, daß das Ventilelement einen zum Stößel hin weisenden Vorsprung aufweist, an dem der Stößel zur Anlage kommt. Das Ventilelement ist in der Regel aus einem elastomeren Werkstoff gebildet. Der Stößel hingegen kann aus einem stabileren und härteren Material gebildet sein, beispielsweise aus einem Metall. In einer besonders zweckmäßigen Ausgestaltung wird der Stößel dadurch gebildet, daß eine Ventilspindel das Ventilelement durchragt, wobei das Ventilelement auf der Ventilspindel befestigt ist. Der Stößel kann dann mit der Ventilspindel (oder auch mit einer anderen Ausbildung eines Vorsprungs) zusammenwirken, so daß die Lebensdauer der Ventilanordnung hoch ist.

Die Erfindung wird im folgenden anhand eines bevorzugten Ausführungsbeispiels in Verbindung mit der Zeichnung beschrieben. Hierin zeigen:
- Fig. 1: eine Prinzipdarstellung zur Erläuterung des Aufbaus der Ventilanordnung und
- Fig. 2: die Ventilanordnung in einem Längsschnitt.

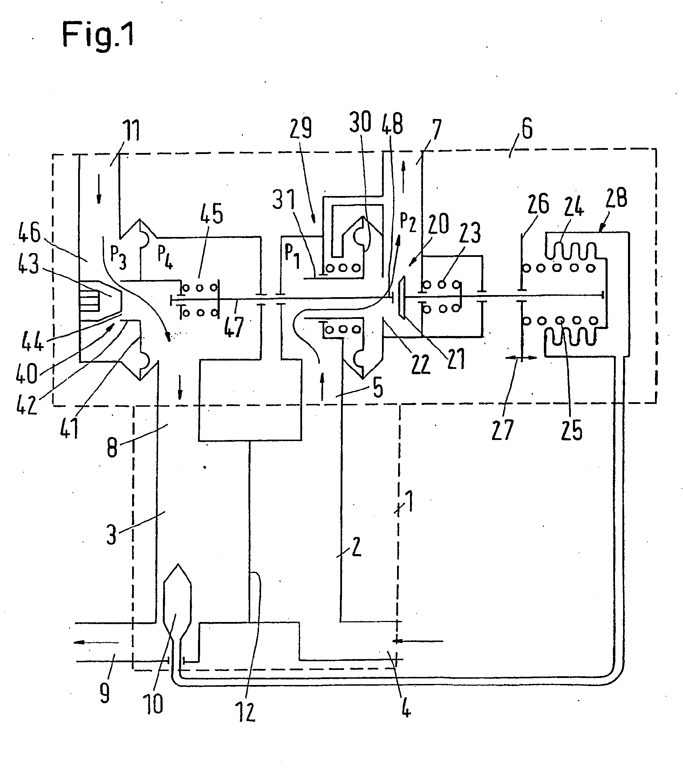

Fig. 1 zeigt einen schematisch dargestellten Wärmetauscher 1 mit einer Primärseite 2 und einer Sekundärseite 3. Die Primärseite 2 weist einen Einlaß 4 auf, der mit einem nicht näher dargestellten Fernwärmeleitungssystem verbunden ist. Die Primärseite 2 weist auch einen Auslaß 5 auf, der über eine Ventilanordnung 6 mit einem Rücklaufanschluß 7 des Fernwärmeleitungsnetzes verbunden ist.

Die Sekundärseite 3 weist einen Eingang 8 auf, durch den Brauchwasser zufließt, und einen Ausgang 9, an dem erwärmtes Brauchwasser entnommen werden kann. Im Bereich des Ausgangs 9 ist ein Temperaturfühler 10 angeordnet, dessen Funktion weiter unten erläutert wird. Der Eingang 8 der Sekundärseite 3 ist über die Ventil-anordnung 6 mit einem Brauchwasseranschluß 11 verbunden, durch den kaltes Brauchwasser zugeführt wird.

In an sich bekannter Weise ist zwischen der Primärseite 2 und der Sekundärseite 3 eine Wärmetauscherfläche 12 angeordnet, die hier nur im Prinzip dargestellt ist. Tatsächlich hat die Wärmetauscherfläche 12 eine wesentlich größere Erstreckung.

Die Ventilanordnung 6 weist ein primärseitiges Ventil 20 mit einem Ventilelement 21 und einem Ventilsitz 22 auf. Das Ventilelement 21 wird durch den Ventilsitz 22 hindurch angeströmt. Das Ventilelement 21 ist durch eine Feder 23 in Öffnungsrichtung vorgespannt. Ein Balgenelement 24, das mit dem Temperaturfühler 10 verbunden ist, wirkt auf das Ventilelement 21 in Schließrichtung. Das Balgenelement 24 arbeitet gegen die Kraft einer Feder 25, die sich an einem verlagerbaren Anschlag 26 abstützt. Durch Verstellen des Anschlags 26 in Richtung eines Doppelpfeiles 27 läßt sich ein Sollwert für die am Ausgang 9 der Sekundärseite 3 herrschende Temperatur des Brauchwassers einstellen.

Wenn die Temperatur am Ausgang 9 der Sekundärseite 3 ansteigt, dann bewegt das Balgenelement 24 das Ventil-element 21 in Richtung auf den Ventilsitz 22 und drosselt damit den Strom von Wärmeträgerfluid durch die Primärseite. Wenn die Temperatur am Ausgang 9 der Sekundärseite 3 absinkt, dann läßt der Druck des Balgen-elements 24 nach, so daß das Ventilelement 21 durch die Kraft der Federn 23, 25 vom Ventilsitz 22 entfernt wird, um einen größeren Durchfluß von Wärmeträgerfluid durch die Primärseite 2 zu ermöglichen. Auf diese Weise ist das primärseitige Ventil 20 ein temperaturgesteuertes Ventil, das durch den temperaturgesteuerten Antrieb 28 gesteuert wird.

Dem primärseitigen Ventil 20 ist noch ein druckgesteuertes Ventil 29 vorgeschaltet. Das druckgesteuerte Ventil 29 weist eine Membrane 30 auf, die von einem Druck P1 vor dem Ventilsitz 22 einerseits und von einem Druck P2 hinter dem Ventilsitz 22 andererseits beaufschlagt wird. Die Membrane 30 verlagert ein Drosselelement 31. Die Funktion des druckgesteuerten Ventils 29 ist an sich bekannt und wird daher nicht weiter erläutert.

Der Strom von Brauchwasser durch die Sekundärseite 3 des Wärmetauschers 1 wird durch ein sekundärseitiges Ventil 40 gesteuert. Das sekundärseitige Ventil 40 weist eine Membran 41 auf, an der ein Ventilsitz 42 befestigt ist. Der Ventilsitz 42 wird bei einer Bewegung der Membran 41 verlagert. Der Ventilsitz 42 bildet mit einem Ventilelement 43 einen Drosselspalt 44, dessen Größe sich in Abhängigkeit von der Stellung der Membran 41 ändert.

Die Stellung der Membran wird bestimmt durch eine Druckdifferenz zwischen einem Druck P3 vor dem Drosselspalt 44 und einem Druck P4 hinter dem Drosselspalt 44. Entgegen dieser Druckdifferenz wirkt die Kraft einer Kompensationsfeder 45, die allerdings erst nach einer gewissen Auslenkung der Membran 41 zu wirken beginnt. Im übrigen wirkt natürlich eine gewisse Eigenspannung der Membran 41 gegen die Druckdifferenz P3-P4.

Wenn auf beiden Seiten der Membran 41 die gleichen Kräfte herrschen, dann bildet der Drosselspalt 44 eine Ruheöffnung. Die Größe dieser Ruheöffnung ist nun dadurch einstellbar, daß das Ventilelement 43, das hier als Konus ausgebildet ist, in einem Gehäuse 46 verstellt werden kann. Das Ventilelement 43 ist in das Gehäuse 46 eingeschraubt, so daß man durch Drehen des Ventilelements 43 seine Lage relativ zur Membran 41 im drucklosen Zustand verändern kann. Gewünscht ist eine möglichst kleine Ruheöffnung, so daß das sekundärseitige Ventil 40 zwar auch dann nicht geschlossen wird, wenn kein Brauchwasser entnommen wird und der Druck P3 vor dem Drosselspalt 44 gleich dem Druck P4 hinter dem Drosselspalt 44 ist. Gleichwohl soll die Ruheöffnung möglichst klein gehalten werden.

Mit der Membran 41 ist über die Kompensationsfeder 45 ein Stößel 47 verbunden, der dementsprechend mit bewegt wird, wenn sich die Membran 41 bewegt. Dieser Stößel 47 wirkt mit seinem anderen Ende 48 auf das Ventilelement 21 des primärseitigen Ventils 20, wenn die Membran 41 weit genug ausgelenkt worden ist.

Der Stößel 47 ist aber so kurz, daß dann, wenn sich die Membran 41 in ihrer Ruhestellung befindet, also keine Druckdifferenz über die Membran 41 herrscht, der Stößel 47 das Ventilelement 21 nicht berührt, solange dies geöffnet ist.

Dies hat nun folgende Auswirkung: Solange kein Brauchwasser entnommen ist, hat der Drosselspalt 44 seine kleinste Größe und die Membran 41 ist nicht ausgelenkt. In dieser Situation berührt das Ende 48 des Stößels 47 das Ventilelement 21 des primärseitigen Ventils nicht. Das primärseitige Ventil 20 arbeitet also ausschließlich als temperaturgesteuertes Ventil unter der Wirkung des temperaturgesteuerten Antriebs 28. Man kann so auf einfache Weise, d.h. mit einfachem mechanischen Aufwand und auch mit einem relativ einfachen Regelkreis, dafür sorgen, daß die Temperatur am Ausgang 9 der Sekundärseite 3 immer auf einem gewünschten Wert gehalten wird.

Wird nun auf der Sekundärseite 3 Wasser entnommen, dann sinkt der Druck P4 ab und die Membran 41 wird über die Druckdifferenz P3 - P4 ausgelenkt. Dabei kommt der Stößel 47 in Kontakt mit dem Ventilelement 21 und beaufschlagt dieses in Öffnungsrichtung, so daß zusätzlich zu der Temperatursteuerung auch eine Beeinflussung des primärseitigen Ventils 20 durch die auf der Sekundärseite durchströmende Menge an Brauchwasser gegeben ist.

Sobald die Wasserentnahme an der Sekundärseite 3 beendet wird, kehrt die Membran 41 in ihren Ruhezustand zurück und die Steuerung des primärseitigen Ventils 20 kann sehr schnell wieder auf eine reine Temperatursteuerung umschalten.

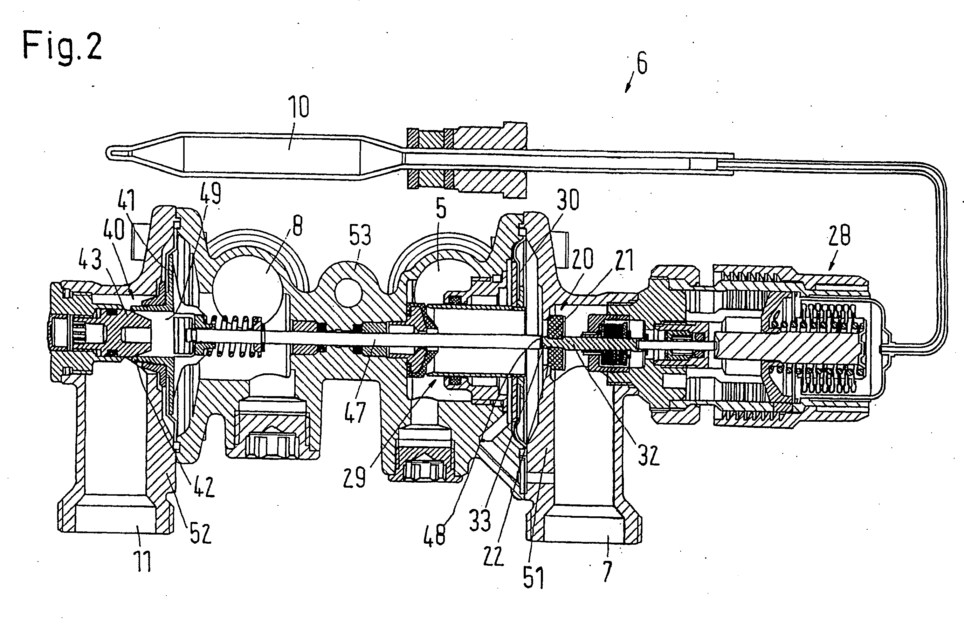

Aus Fig. 2 ergibt sich nun der mechanische Aufbau der Ventilanordnung 6. Gleiche Teile sind mit den gleichen Bezugszeichen wie in Fig. 1 bezeichnet.

Die Ventilanordnung weist ein erstes Gehäuseteil 51 auf, das das primärseitige Ventil 20 aufnimmt, ein zweites Gehäuseteil 52, das das sekundärseitige Ventil 40 aufnimmt, und ein drittes Gehäuseteil 53, das das erste Gehäuseteil 51 mit dem zweiten Gehäuseteil 52 verbindet und im übrigen den Stößel 47 lagert. Im ersten Gehäuseteil 51 ist der Rücklaufanschluß 7 angeordnet. Dieser bildet einen ersten Anschluß der Primärseite. Im zweiten Gehäuseteil 52 ist der Brauchwasseranschluß 11 angeordnet. Dieser bildet einen zweiten Anschluß der Sekundärseite. Im dritten Gehäuseteil ist der Auslaß 5 und der Eingang 8 angeordnet. Diese beiden Anschlüsse bilden also den zweiten Anschluß der Primärseite und einen ersten Anschluß der Sekundärseite.

Die beiden Membranen 30, 41 erstrecken sich bis in einen Berührungsbereich zwischen dem ersten Gehäuseteil 51 und dem dritten Gehäuseteil 53 bzw. dem zweiten Gehäuseteil 52 und dem dritten Gehäuseteil 53. Dies hat den Vorteil, daß die beiden Membranen 30, 41 durch das Zusammensetzen der drei Gehäuseteile einerseits fixiert werden, andererseits aber auch als Dichtungen zwischen den Gehäuseteilen 51-53 verwendet werden können.

Das erste Gehäuseteil 51 mit dem primärseitigen Ventil 20, das zweite Gehäuseteil 52 mit dem sekundärseitigen Ventil 40 und das dritte Gehäuseteil 53 mit dem Stößel 47 können jeweils für sich vormontiert werden. Dabei ist eine Ausrichtung der einzelnen Elemente quer zu ihrer Bewegungsrichtung nur in einem relativ groben Maß erforderlich, weil beispielsweise der Stößel 47 und das Ventilelement 21 über eine Berührungsfläche am Ende 48 aneinander anliegen, die quer zur Längserstreckung des Stößels 47 angeordnet ist. Das Ventilelement 21 muß also nicht genau mittig getroffen werden.

Das Ventilelement 21 weist eine Spindel 32 auf, die das Ventilelement 21 durchragt und auf der anderen Seite einen Vorsprung 33 bildet, an dem der Stößel 47 anliegt. Dieser Vorsprung 33 kann dementsprechend aus einem Metall gebildet sein, das mit dem Metall des Stößels 47 verschleißarm zusammenwirkt. Der Vorsprung 33 ist wesentlich widerstandsfähiger gegen eine Beaufschlagung durch den Stößel 47 als das Ventilelement 21 selbst, das in der Regel aus einem elastomeren Material gebildet ist.

Die Membran 41 weist eine Öffnung 49 auf, durch die Brauchwasser strömt, das durch den Ventilsitz 42 getreten ist. Um dieses Brauchwasser auch zum Eingang 8 des Wärmetauschers gelangen zu lassen, ist der Stößel 47 zweckmäßigerweise über einen käfigartigen Verbinder mit der Membran 41 verbunden, der nicht näher dargestellt ist und beispielsweise drei sternförmig angeordnete Beine aufweist.

In Fig. 2 sind das primärseitige Ventil 20 und das sekundärseitige Ventil 40 in vollkommen geschlossenem Zustand dargestellt. In diesem Zustand kann der Stößel 47 am Ventilelement 21, genauer gesagt dessen Vorsprung 33, anliegen. Im Betrieb wird aber das Ventilelement 21 weiter vom Ventilsitz 22 abheben als der Ventilsitz 42 vom Ventilelement 43, so daß ohne Brauchwasserentnahme ein wirksamer Abstand zwischen dem Stößel 47 und dem Ventilelement 21 besteht.

## Patentansprüche

1. Ventilanordnung (6) zum Anschließen eines WäLrmetauschers (1) einer Warmwasserentnahmevorrichtung an ein Fernwärmenetz mit einem primärseitigen Ventil (20), das einen Durchfluß von Wärmeträgerfluid durch eine Primärseite (2) des Warmetauschers (1) steuert, und einem druckgesteuerten sekundärseitigen Ventil (40), das auf einen Durchfluß von Brauchwasser durch eine Sekundärseite (3) des Wärmetauschers (1) einwirkt, wobei das primärseitige Ventil (20) durch das sekundärseitige Ventil (40) betätigbar ist, wobei das primärseitige Ventil (20) in einem ersten Gehäuseteil (51) und das sekundärseitige Ventil (40) in einem zweiten Gehäuseteil (52) angeordnet ist und die beiden Gehäuseteile (51, 52) durch ein drittes Gehäuseteil (53) miteinander verbunden sind, das eine Betätigungseinrichtung (47) aufnimmt, mit der das primärseitige Ventil (20) durch das sekundärseitige Ventil (40) betätigbar ist **dadurch gekennzeichnet, dass** dem primärseitigen Ventil (20) ein druckgesteuertes Ventil (29) vorgeschaltet ist, das eine Membrane (30) aufweist, die sich bis in einen Berührungsbereich zwischen dem ersten Gehäuseteil (51) und dem dritten Gehäuseteil (53) erstreckt.

2. Ventilanordnung nach Anspruch 1, **dadurch gekennzeichnet, daß** das erste Gehäuseteil (51) einen primärseitigen ersten Anschluß (7), das zweite Gehäuseteil (52) einen sekundärseitigen zweiten Anschluß (11) und das dritte Gehäuseteil (53) einen primärseitigen zweiten Anschluß (5) und einen sekundärseitigen ersten Anschluß (8) aufweist.

3. Ventilanordnung nach Anspruch 1 oder 2, **dadurch gekennzeichnet, daß** das sekundärseitige Ventil (40) ein an einer Membrane (41) gelagertes bewegliches Ventilelement (42) aufweist, wobei sich die Membrane (41) bis in einen Berührungsbereich zwischen dem zweiten Gehäuseteil (52) und dem dritten Gehäuseteil (53) erstreckt.

4. Ventilanordnung nach Anspruch 3, **dadurch gekennzeichnet, daß** das bewegliche Element als Ventilsitz (42) ausgebildet ist, wobei die Membran (41) eine mit dem Ventilsitz (42) in Verbindung stehende Öffnung (49) aufweist, durch die Brauchwasser hindurchfließen kann.

5. Ventilanordnung nach einem der Ansprüche 1 bis 4, **dadurch gekennzeichnet, daß** die Betätigungseinrichtung einen Stößel (47) aufweist, der in einem Mittelabschnitt des dritten Gehäuseteils (53) gelagert ist.

6. Ventilanordnung nach einem der Ansprüche 1 bis 5, **dadurch gekennzeichnet, daß** das sekundärseitige Ventil (40) eine einstellbare Ruheöffnung (44) aufweist.

7. Ventilanordnung nach Anspruch 6, **dadurch gekennzeichnet, daß** das sekundärseitige Ventil (40) an einem Ende des zweiten Gehäuseteils (52) angeordnet ist.

8. Ventilanordnung nach Anspruch 6 oder 7, **dadurch gekennzeichnet, daß** das sekundärseitige Ventil (40) ein stationäres Ventilelement (43) aufweist, dessen Position relativ zu einer Ruhestellung der Membran (41) einstellbar ist.

9. Ventilanordnung nach Anspruch 8, **dadurch gekennzeichnet, daß** das Ventilelement (43) als Konus ausgebildet ist.

10. Ventilanordnung nach Anspruch 8 oder 9, **dadurch gekennzeichnet, daß** das Ventilelement (43) in das zweite Gehäuseteil (52) eingeschraubt ist.

11. Ventilanordnung nach den Ansprüchen 3,5 und einem der Ansprüche 7 bis 10, **dadurch gekennzeichnet, daß** der Stößel durch das bewegliche Element (42) des sekundärseitigen Ventils (40) angetrieben ist und auf ein Ventilelement (21) des primärseitigen Ventils (20) wirkt, wobei der Stößel (47) so kurz ist, daß er im Ruhezustand des beweglichen Elements (42) des sekundärseitigen Ventils (40) einen Abstand zum Ventilelement (21) im geöffneten Zustand des primärseitigen Ventils (20) aufweist.

12. Ventilanordnung nach Anspruch 11, **dadurch gekennzeichnet, daß** das Ventilelement (21) des primärseitigen Ventils (20) einen temperaturgesteuerten Antrieb (28) aufweist.

13. Ventilanordnung nach Anspruch 11 oder 12, **dadurch gekennzeichnet, daß** der Stößel (47) und das Ventilelement (21) des primärseitigen Ventils (20) über eine Berührungsfläche (48) in Kontakt kommen, die senkrecht zur Bewegungsrichtung des Stößels (47) angeordnet ist.

14. Ventilanordnung nach Anspruch 13, **dadurch gekennzeichnet, daß** das Ventilelement (21) einen zum Stößel (47) hin weisenden Vorsprung (33) aufweist, an dem der Stößel (47) zur Anlage kommt.

## Claims

1. Valve arrangement (6) for connecting a heat exchanger (1) of a hot water extraction arrangement of a district heating net with a primary side valve (20) that controls a flow of heat medium through a primary side (2) of the heat exchanger (1), and a pressure controlled secondary side valve (40) that acts upon a flow of process water through a secondary side (3) of the heat exchanger (1), the primary side valve (20) being actuatable by the secondary side valve (40), the primary side valve (20) being arranged in a first housing part (51) and the secondary side valve (40) being arranged in a second housing part (52), the two housing parts (51, 52) being connected through a third housing part (53) that accommodates an actuating device (47), by means of which the primary side valve (20) can be actuated by the secondary side valve (40), **characterised in that** a pressure controlled valve (29) is inserted before the primary side valve (20), said pressure controlled valve (29) comprising a membrane (30) that extends into a contact area between the first housing part (51) and the third housing part (53).

2. Valve arrangement according to claim 1, **characterised in that** the first housing part (51) comprises a primary side first connection (7), the second housing part (52) comprises a secondary side second connection (11) and the third housing part (53) comprises a primary side second connection (5) and a secondary side first connection (8).

3. Valve arrangement according to claim 1 or 2, **characterised in that** the secondary side valve (40) comprises a movable valve element (42) supported on a membrane (41), the membrane (41) extending into a contact area between the second housing part (52) and the third housing part (53).

4. Valve arrangement according to claim 3, **characterised in that** the movable element is made as a valve seat (42), the membrane (41) comprising an opening (49) that is in connection with the valve seat (42), through which opening (49) the process water can flow.

5. Valve arrangement according to one of the claims 1 to 4, **characterised in that** the actuating device comprises a tappet (47) that is supported in a central section of the third housing part (53).

6. Valve arrangement according to one of the claims 1 to 5, **characterised in that** the secondary side valve (40) comprises an adjustable resting opening (44).

7. Valve arrangement according to claim 6, **characterised in that** the secondary side valve (40) is located at an end of the second housing part (52).

8. Valve arrangement according to claim 6 or 7, **characterised in that** the secondary side valve (40) comprises a stationary valve element (43), whose position is adjustable in relation to a resting position of the membrane (41).

9. Valve arrangement according to claim 8, **characterised in that** the valve element (43) has the form of a cone.

10. Valve arrangement according to claim 8 or 9, **characterised in that** the valve element (43) is screwed into the second housing part (52).

11. Valve arrangement according to the claims 3, 5 and one of the claims 7 to 10, **characterised in that** the tappet is driven by the movable element (42) of the secondary side valve (40) and acts upon a valve element (21) of the primary side valve (20), the tappet (47) being so short that in the resting state of the movable element (42) of the secondary side valve (40) it has a distance to the valve element (21) in the open state of the primary side valve (20).

12. Valve arrangement according to claim 11, **characterised in that** the valve element (21) of the primary side valve (20) comprises a temperature controlled drive (28).

13. Valve arrangement according to claim 11 or 12, **characterised in that** the tappet (47) and the valve element (21) of the primary side valve (20) contact each other via a contact face (48) that is arranged to be perpendicular to the movement direction of the tappet (47).

14. Valve arrangement according to claim 13, **characterised in that** the valve element (21) comprises a projection (33) in the direction of the tappet (47), the tappet (47) coming to rest on said projection (33).

## Revendications

1. Système de soupape (6) pour le raccordement d'un échangeur de chaleur (1) d'un dispositif de prélèvement d'eau chaude à un réseau de chauffage urbain, comprenant une soupape côté primaire (20) qui commande un écoulement traversant d'un fluide caloporteur à travers un côté primaire (2) de l'échangeur de chaleur (1), et une soupape côté secondaire (40) commandée en pression, qui agit sur un écoulement traversant d'eau industrielle à travers un côté secondaire (3) de l'échangeur de chaleur (1), dans lequel la soupape côté primaire (20) est susceptible d'être actionnée par la soupape côté secondaire (40), ladite soupape côté primaire (20) étant agencée dans une première partie de boîtier (51) et la soupape côté secondaire (40) étant agencée dans une deuxième partie de boîtier (52) et les deux parties de boîtier (51, 52) sont reliées l'une à l'autre par une troisième partie de boîtier (53) qui reçoit un système d'actionnement (47) au moyen duquel la soupape côté primaire (20) peut être actionnée par la soupape côté secondaire (40),
**caractérisé en ce qu'**une soupape (29) commandée en pression est branchée en amont de la soupape côté primaire (20), ladite soupape comprenant une membrane (30) qui s'étend jusque dans une zone de contact entre la première partie de boîtier (51) et la troisième partie de boîtier (53).

2. Système de soupape selon la revendication 1, **caractérisé en ce que** la première partie de boîtier (51) comprend un premier raccord (7) côté primaire, la deuxième partie de boîtier (52) comprend un deuxième raccord (11) côté secondaire, et la troisième partie de boîtier (53) comprend un deuxième raccord (5) côté primaire et un premier raccord (8) côté secondaire.

3. Système de soupape selon la revendication 1 ou 2, **caractérisé en ce que** la soupape côté secondaire (40) comprend un élément de soupape mobile (42) monté sur une membrane (41), ladite membrane (41) s'étendant jusque dans une zone de contact entre la première partie de boîtier (52) et la troisième partie de boîtier (53).

4. Système de soupape selon la revendication 3, **caractérisé en ce que** l'élément mobile est réalisé sous forme de siège de soupape (42), et la membrane (41) présente une ouverture (49) qui communique avec le siège de soupape (42) et à travers laquelle de l'eau industrielle est capable de s'écouler.

5. Système de soupape selon l'une des revendications 1 à 4, **caractérisé en ce que** le moyen d'actionnement comprend un poussoir (47), celui-ci étant monté dans un tronçon médian de la troisième partie de boîtier (53).

6. Système de soupape selon l'une des revendications 1 à 5, **caractérisé en ce que** la soupape côté secondaire (40) comprend une ouverture de repos (44) réglable.

7. Système de soupape selon la revendication 6, **caractérisé en ce que** la soupape côté secondaire (40) est agencée à une extrémité de la deuxième partie de boîtier (52).

8. Système de soupape selon la revendication 6 ou 7, **caractérisé en ce que** la soupape côté secondaire (40) comprend un élément de soupape stationnaire (43), dont la position par rapport à une position de repos de la membrane (41) est réglable.

9. Système de soupape selon la revendication 8, **caractérisé en ce que** l'élément de soupape (43) est réalisé comme un cône.

10. Système de soupape selon la revendication 8 ou 9, **caractérisé en ce que** l'élément de soupape (43) est vissé dans la deuxième partie de boîtier (52).

11. Système de soupape selon les revendications 3, 5 et selon l'une des revendications 7 à 10, **caractérisé en ce que** le poussoir est entraîné par l'élément mobile (42) de la soupape côté secondaire (40) et agit sur un élément de soupape (21) de la soupape côté primaire (20), ledit poussoir (47) étant aussi court qu'il présente, dans la situation de repos de l'élément mobile (42) de la soupape côté secondaire (40), une distance par rapport à l'élément de soupape (21) dans la situation ouverte de la soupape côté primaire (20).

12. Système de soupape selon la revendication 11, **caractérisé en ce que** l'élément de soupape (21) de la soupape côté primaire (20) comprend un entraînement commandé en température (28).

13. Système de soupape selon la revendication 11 ou 12, **caractérisé en ce que** le poussoir (47) et l'élément de soupape (21) de la soupape côté primaire (20) viennent en contact via une surface de contact (48) qui est agencée perpendiculairement à la direction de déplacement du poussoir (47).

14. Système de soupape selon la revendication 13, **caractérisé en ce que** l'élément de soupape (21) comprend une saillie (33) dirigée vers le poussoir (47), contre laquelle le poussoir (47) vient en appui.
